# EUROPÄISCHE PATENTSCHRIFT

(11) **EP 2 084 801 B1**
(45) Veröffentlichungstag und Bekanntmachung des Hinweises auf die Patenterteilung: **05.05.2010**
(21) Anmeldenummer: 07819189.7
(22) Anmeldetag: 22.10.2007
(51) Int. Cl.: H02J 3/00, H02J 3/48

(54) **VERFAHREN ZUM BETREIBEN EINES NIEDERSPANNUNGSNETZES**
METHOD FOR OPERATING A LOW-VOLTAGE ELECTRICAL SYSTEM
PROCÉDÉ DE FONCTIONNEMENT D'UN RÉSEAU À BASSE TENSION

(30) Priorität: 26.10.2006 DE 102006050509
(43) Veröffentlichungstag der Anmeldung: 05.08.2009
(73) Patentinhaber: KAESTLE, Gunnar, 76131 Karlsruhe (DE)
(72) Erfinder: KAESTLE, Gunnar, 76131 Karlsruhe (DE)
(74) Vertreter: Durm, Frank
(86) Internationale Anmeldenummer: PCT/EP2007/009124
(87) Internationale Veröffentlichungsnummer: WO 2008/049556

(56) Entgegenhaltungen:
- EP-A- 0 923 181
- US-A1- 2006 152 010

## Beschreibung

Die Erfindung betrifft ein Verfahren zum Betreiben eines Niederspannungsnetzes, an das eine oder mehrere dezentrale Stromerzeugungsanlagen sowie ein Betriebsmittel zur Spannungsregelung im Niederspannungsnetz angeschlossen sind. Die Erfindung befasst sich insbesondere mit der Bereitstellung von Ausgleichs- oder Regelenergie im Stromnetz durch dezentrale Stromeinspeiser.

Regelenergie wird benötigt, um die Erzeugung elektrischer Energie zeitgleich auf dem Niveau des Verbrauches zu halten. Dies ist für einen stabilen Betrieb von Stromnetzwerken notwendig. Es wird dabei zwischen Primärregelleistung, Sekundärregelleistung und Tertiärregelleistung (so genannte Minutenreserve) unterschieden. Üblicherweise wird Regelenergie von gedrosselten Wärmekraftwerken und schnell an- und abfahrbaren Kraftwerken geliefert wie z. B. Gasturbinen- und Wasserkraftwerken.

Stromeinspeisungen durch dezentrale Energieumwandlungsanlagen (DEA) treten unter anderem im Niederspannungsnetz auf. Als Stromeinspeiser sind beispielsweise Photovoltaikanlagen, Kleinstwasserkraftanlagen und stromerzeugende Heizungen (Mikro-Kraft-Wärme-Kopplung, Mikro-KWK) zu nennen.

Die Koppelung mehrerer Stromeinspeiser zu einem Verbund ist als "virtuelles Kraftwerk" bekannt. Ein solches virtuelles Kraftwerk bietet durch die Synergieeffekte für das Gesamtsystem Vorteile. Durch die externe Beeinflussung der Einzelanlagen können kooperative Aufgaben wahrgenommen werden, z. B. zur kollektiven Lieferung von Regelenergie oder zum Ausgleich von Bezugsspitzen.

Eine Möglichkeit der Koordinierung des DEA-Verbundes besteht darin, dass eine zentrale Stelle vorgesehen ist, von der die Steuerung und Optimierung des virtuellen Kraftwerks erfolgt. Eine andere Möglichkeit besteht in einem selbstorganisierenden System, in dem die einzelnen Stromeinspeiser über Peer-to-Peer-Beziehungen kommunizieren. In beiden Fällen spricht man von einer Netzführung, da die Stromeinspeisung nicht nur aus dem lokalen Lastverlauf heraus resultiert, sondern auch von Seiten des Stromnetzes vorgegeben wird.

In der Literatur vorgestellte Konzepte für virtuelle Kraftwerke benötigen für jeden Stromeinspeiser neben dem Stromnetzanschluss einen Anschluss an ein Kommunikationsnetz. Das anfallende Datenaufkommen ist erheblich. Die Regelung des virtuellen Kraftwerkes wird mit steigender Anzahl der zu steuernden Anlagen immer aufwendiger. Die Kosten für die Kommunikation und Regelung sind aufgrund der fein-granularen Struktur eines virtuellen Kraftwerks höher als bei Großkraftwerken.

Aufgabe der Erfindung ist die Angabe eines einfachen und robusten Verfahrens zum Betreiben eines Niederspannungsnetzes, das dezentrale Stromeinspeiser in einem stabilen und selbstregelnden Netzbetrieb integriert.

Zur Lösung dieses technischen Problems wird gemäß dem Patentanspruch 1 vorgeschlagen, dass die Regelung der Wirkleistung, die von mindestens einer dezentralen Stromeinspeisungsanlage in das Niederspannungsnetz abgegeben wird, durch Variation des Referenzwerts für die Netzspannungsregelung erfolgt.

Das Prinzip, dass sich die von einem Stromeinspeiser in das Netz abgegebene Leistung nach dem Spannungsniveau am Einspeiseknoten richtet, ist an sich bekannt. Beispielhaft wäre das automatische Stromhandelssystem aus "Der gangbare Weg in die regenerative Energiewirtschaft" von Christoph Müller, Polygon-Verlag, 1992 und die beiden 2005 vom ISET, Kassel publizierten DISPOWER-Veröffentlichungen "A Power Quality Management Algorithm for Low Voltage Grids with Distributed Resources (#17)" von Wasiak, Thoma, Foote und "Power Quality Improvement using Inverter-Interfaced Distributed Generators (#35)" von Belmans, Driesen, Green zu nennen.

Bei den bekannten Systemen und Verfahren steigt oder sinkt die Netzspannung in Abhängigkeit der aus dem betreffenden Netzsegment entnommenen Leistung. Im Gegensatz dazu schlägt die Erfindung eine aktive Variation der Netzspannung vor, das heißt, der variable Referenzwert für die Regelung der Netzspannung wird von einer übergeordneten Stelle vorgegeben.

In Systemen zur Verbrauchersteuerung ist es schon lange bekannt, eine aktive Variation der Netzspannung durchzuführen. So beschreibt die DE 1 159 081 B1 ein Verfahren zum selbsttätigen Ein- und Ausschalten von Zusatz-Strom-Verbrauchern in Abhängigkeit vom Winkel zwischen Strom und Spannung der Übertragungsleitung im Energieverteilungsnetz, und ist aus der EP 0 378 473 A1 bekannt, dass bei kritischen Netzzuständen über den Stufentransformator die Netzspannung bewusst abgesenkt wird, um so die angeschlossenen Verbraucher zu einer reduzierten Leistungsaufnahme zu zwingen. Erfindungsgemäß erfolgt die aktive Variation des Referenzwerts für die Netzspannung jedoch nicht zur Verbrauchersteuerung, sondern zur Steuerung einspeisender Stromerzeugungsanlagen.

Als physikalische Schicht der Datenverbindung für die Netzführung dient erfindungsgemäß die Niederspannungsleitung selbst. Das nutzbare Datum, das diese als Datenbus vermittelt, ist die Spannungshöhe. Im Gegensatz zur induktiven Eigenschaft von Mittel- und Hochspannungsleitungen haben Niederspannungsleitungen eine überwiegend ohmsche Charakteristik. Es kann daher vom Spannungsabfall auf den Lastzustand des Netzsegmentes geschlossen werden.

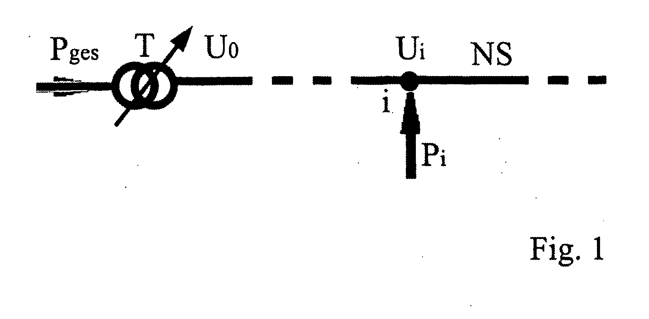

Figur 1 verdeutlicht den Grundgedanken der Erfindung: Sinkt am Einspeiseknoten die Spannung Ui, so wird die Einspeiseleistung Pi erhöht und umgekehrt. Beispielsweise kann am Einspeiseknoten eine Mikro-Kraft-Wärme-Kopplungsanlage angeschlossen sein; es sind aber auch batteriegepufferte Stromquellen und ähnliche Einspeiser steuerbarer Art möglich.

Das oben beschriebene Verhalten der Einspeiser im Falle der Netzführung resultiert in einem vergleichsmäßigen Energiefluss über den das Netzsegment versorgenden Transformator T. Die dynamische Anpassung des Energieflusses über den Transformator, wie man sie unter anderem für die Lieferung von Regelenergie oder das Abfahren sich ändernder Erzeugungsprofile benötigt, erfolgt erfindungsgemäß durch die Variation der Spannungshöhe auf der Niederspannungsseite des Transformators.

Die variable Sekundärspannung dient dabei als Signalträger für die Anforderung der geregelten Leistung. Dabei sollte zweckmäßigerweise das Toleranzband der Normspannungen, zum Beispiel nach DIN IEC 60038, nicht verlassen werden, da anderenfalls eine selbsttätige Abschaltung einer oder mehrer dezentralen Stromerzeugungsanlagen zu einer Netzinstabilität führen würde.

Zur aktiven Variation der Netzspannung wird bevorzugt ein Transformator mit variablem Übersetzungsverhältnis, zum Beispiel ein Längsregler mit transformatorisch eingekoppelter Zusatzspannung oder ein Laststufenschalter (engl. on load tap changer) eingesetzt. Die Spannungsvariation kann dabei in Ortsnetzstationen, aber auch auf einer höheren Spannungsebene in den Umspannstationen erfolgen. Als weitere Betriebsmittel zur Spannungsregelung im Verteilnetz sind z. B. Netzspannungsregler in Form von Spartransformatoren, DEA mit Wirk- oder Blindleistungsregelung oder auch Mittelspannungs-Gleichstromkupplungen zu nennen.

Senkt ein spannungsvariabler Transformator die Spannung geringfügig ab, so werden in dem von ihm versorgten Netzsegment die dezentralen Stromeinspeiser zu verstärkter Einspeisung angeregt, was zu einer reduzierten Netzlast führt. Umgekehrt bewirkt ein Anheben der Spannung eine verringerte Einspeisung und damit eine höhere Netzlast. Als unmittelbarer datentechnischer Knotenpunkt ist somit nur noch ein spannungsvariabler Transformator in ein übergeordnetes Leitsystem einzubinden, was den Kommunikationsaufwand drastisch reduziert.

Im Folgenden wird das erfindungsgemäße Verfahren am Beispiel einer stromerzeugenden Heizungsanlage näher erläutert.

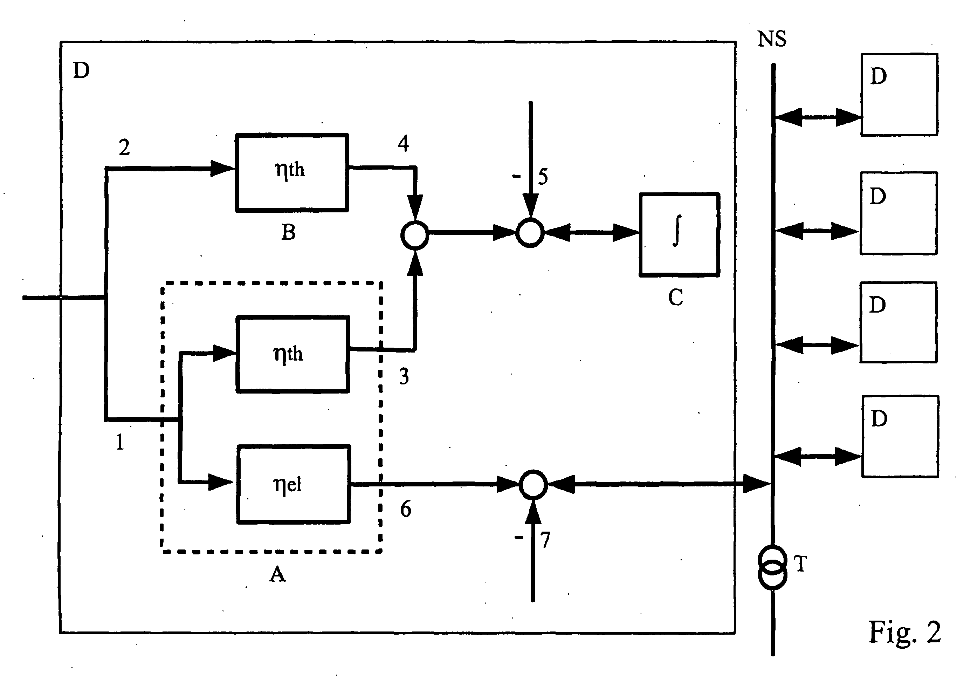

In Fig. 2 sind die Energieflüsse innerhalb eines Gebäudes D dargestellt, des Weiteren der Verbund zu weiteren Gebäuden D über eine gemeinsame Niederspannungsleitung NS, welche von einem Distributionstransformator T mit variablem Übersetzungsverhältnis gespeist wird.

Neben der Mikro-Kraft-Wärme-Kopplungsanlage (KWK) A wird in Heizungsanlagen oft auch ein Zusatzbrenner B zur Deckung der thermischen Spitzenlast und ein Wärmespeicher C verwendet. Als Brennstoff 1 für die KWK-Anlage, aber auch für den Zusatzbrenner 2 kann Erdgas, Flüssiggas oder Heizöl zum Einsatz kommen. Energieträger auf Basis von Biomasse sind ebenfalls möglich. Die Abwärme 3 des KWK-Aggregats A sowie der Heizwärmestrom 4 des Zusatzbrenners B dienen zur Deckung der thermischen Last 5 des Gebäudes D. Dies ist im Wesentlichen der Raumwärmebedarf und jener zur Warmwassererzeugung. Auch eine Absorptionskältemaschine ist als Wärmesenke denkbar. Der Wärmespeicher C entkoppelt die Wärmeerzeugung von der Wärmenachfrage. Die erzeugte elektrische Energie 6 wird für hausinterne elektrische Lasten 7 verwendet, der Saldo wird über die Niederspannungsleitung NS ausgeglichen.

Neben einer wärmegeführten Betriebsweise ist dank der Entkoppelung durch den Wärmespeicher auch eine Stromführung bzw. Netzführung realisierbar.

Hierbei folgt die KWK-Anlage dem lokalen Strombedarf bzw. einer Netzvorgabe. Um das Wegkühlen von überschüssiger Wärme zu vermeiden, wird ein strom- bzw. netzgeführter und gleichzeitig wärmegedeckelter Betrieb gewählt.

Eine Form der Netzführung auf Basis lokal messbarer Größen ist die Spannungsführung. Da bei Niederspannungsleitungen der ohmsche Widerstandsbelag den Induktivitätsbelag dominiert, kann die KWK-Anlage von der Messung der Spannung am Einspeisepunkt auf die Last des NS-Netzsegmentes schließen. Vorteilhafterweise wird bevorzugt bei hoher Netzlast eingespeist, d.h. wenn ein Spannungstal vorliegt. Üblicherweise korreliert der Wert des Stromes auf Übertragungsnetzebene positiv mit der gemessenen NS-Netzlast. Des Weiteren ermöglichen spannungssensitive Einspeiser eine verbesserte Ausnutzung der Netzbetriebsmittel, da Netzausbaumaßnahmen aufgrund von Verletzungen des Spannungsbandes verhindert bzw. verzögert werden können.

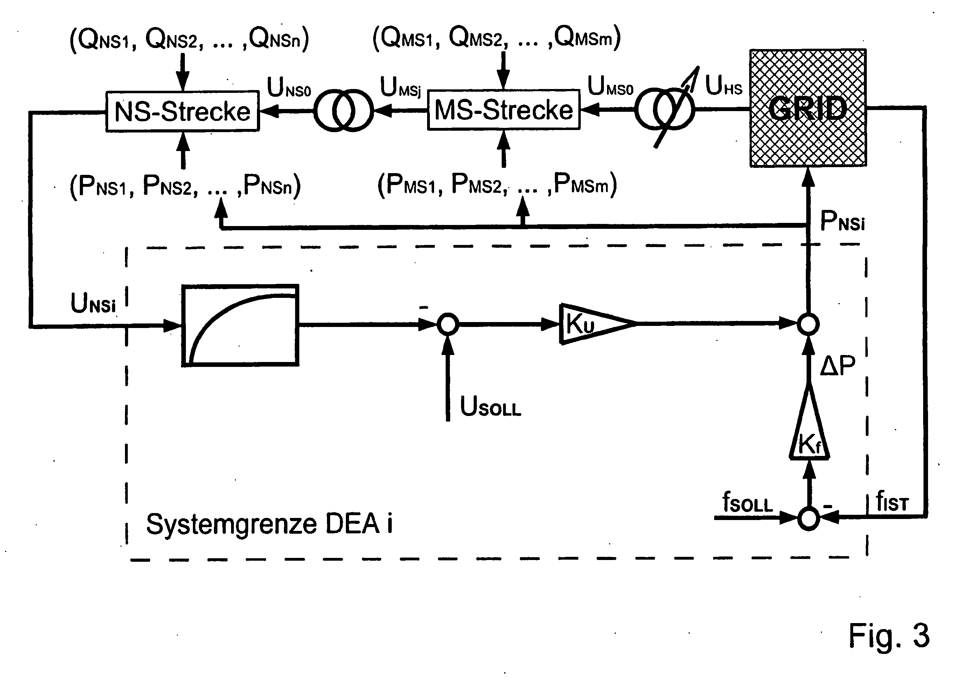

Fig. 3 erläutert, wie spannungsgeführte Stromerzeugungsanlagen im NS-Netz von zentraler Stelle aus geregelt werden. In dem Beispiel ist mittels der Parameter fₛₒₗₗ und K_{f} eine Primärregelung der Wirkleistung möglich. Zusätzlich erfolgt die Verknüpfung der abzugebenden Wirkleistung mit der Spannung über ein Parameterpaar Uₛₒₗₗ und Kᵤ. Hierbei erfolgt eine Bearbeitung des Eingangssignals UNSi durch geeignete Schätzer bzw. Filter, um schnelle Spannungsänderungen auszublenden. Das zu nutzende Signal sind die langsamen Spannungsänderungen im Zeitbereich von Minuten, wie sie beispielsweise in der EN 50160 definiert werden. Der Spannungsregler am Laststufenschalter des Leistungstrafos kann nun von einem fixen Referenzwert für UMS0 abweichen und einen Wert wählen, der leicht darüber oder darunter liegt. Diese Spannungsänderung pflanzt sich über die Mittelspannungs- und Niederspannungsstrecken bis zur Mikro-KWK-Anlage fort, die daraufhin zu mehr oder zu weniger Leistungsabgabe angeregt wird.

Aufgrund der Ungewissheit über die inneren Zustände der stromerzeugenden Heizung, insbesondere der Ladezustand des Wärmespeichers, kann die Leittechnik hinter dem spannungsregelnden Laststufenstufenschalter nicht von einem deterministischen Verhalten einer einzelnen stromerzeugenden Heizung auf die Spannungsänderung ausgehen. Die Systemantwort ist jedoch bei einer Vielzahl von spannungsgeführten DEA statistisch erfassbar. In Kennfeldern werden gemessene jahres- und tageszeitabhängige dP/dU-Elastizitäten abgelegt. Mit diesen Werten lässt sich bestimmen, welcher Regelenergieimpuls generiert werden kann. Ein Verteilnetzbetreiber kann mit diesem Wissen die Netzlastspitze gegenüber der übergeordneten Netzebene reduzieren bzw. Regelenergie ins Übertragungsnetz exportieren.

## Patentansprüche

1. Verfahren zum Betreiben eines Niederspannungsnetzes, an das mindestens eine dezentrale Stromerzeugungsanlage sowie ein Betriebsmittel zur Spannungsregelung im Niederspannungsnetz, insbesondere ein Transformator mit variablem Übersetzungsverhältnis, angeschlossen sind, wobei die dezentrale Stromerzeugungsanlage die Wirkleistungseinspeisung bei fallender Netzspannung erhöht und bei steigender Netzspannung erniedrigt, **dadurch gekennzeichnet, dass** durch Variation des Referenzwerts für die Netzspannungsregelung des Niederspannungsnetzes diese Netzspannung innerhalb des Toleranzbandes der Normspannungen beeinflusst wird und so die Wirkleistungseinspeisung verändert wird.

2. Verfahren nach Anspruch 1, **dadurch gekennzeichnet, dass** die Regelung der Wirkleistung im Zeitbereich einer Tertiärregelung erfolgt.

3. Verfahren nach einem der Ansprüche 1 oder 2, **dadurch gekennzeichnet, dass** die Variation des Referenzwerts für die Netzspannungsregelung durch Spannungsregler im Netz erfolgt.

4. Verfahren nach Anspruch 1 oder 2, **dadurch gekennzeichnet, dass** die Variation des Referenzwerts für die Netzspannungsregelung durch weitere Stromerzeugungsanlagen über die Regelung der Wirk- oder Blindleistung erfolgt.

5. Verfahren nach Anspruch 1 oder 2, **dadurch gekennzeichnet, dass** die Variation des Referenzwerts für die Netzspannungsregelung durch Mittelspannungs-Gleichstromkupplungen erfolgt.

6. Verfahren nach einem der Ansprüche 1 bis 5, **gekennzeichnet durch** die folgenden Schritte:
- Messen des Leistungsflusses P in einem Netzsegment
- Ermitteln der geregelten Spannung U an der zugehörigen Spannungs regeleinrichtung
- Berechnung einer zeitabhängigen dP/dU-Kennlinie;
- Variation des Referenzwerts für die Netzspannungsregelung in Ab hängigkeit der dP/dU-Kennlinie.

7. Verfahren nach Anspruch 6, **dadurch gekennzeichnet, dass** die Änderung des Leistungsflusses P einem vorgegebenen Wert entspricht.

8. Verfahren nach Anspruch 6 oder 7, **dadurch gekennzeichnet, dass** eine vorgegebene maximale Wirkleistung nicht überschritten wird.

## Claims

1. Method for operating a low-voltage network, to which at least one decentralised electricity generation plant as well as equipment for voltage regulation in the low-voltage network, particularly a transformer with a variable transformation ratio, are connected, wherein the decentralised electricity generation plant increases the active power feed-in in the case of falling network voltage and lowers the same in the case of increasing network voltage, **characterised in that** by variation of the reference value for the network voltage regulation of the low-voltage network, this network voltage is influenced within the tolerance band of the standard voltages and so the active power feed-in is changed.

2. Method according to Claim 1, **characterised in that** the regulation of the active power takes place in the time interval of a tertiary regulation.

3. Method according to one of Claims 1 or 2, **characterised in that** the variation of the reference value for the low-voltage regulation takes place by means of voltage regulators in the network.

4. Method according to Claim 1 or 2, **characterised in that** the variation of the reference value for the network voltage regulation takes place by means of further electricity generation plants via the regulation of the active or reactive power.

5. Method according to Claim 1 or 2, **characterised in that** the variation of the reference value for the network voltage regulation takes place by means of medium-voltage DC couplings.

6. Method according to one of Claims 1 to 5, **characterised by** the following steps:
- Measurement of the power flow P in a network segment
- Determination of the regulated voltage U at the associated voltage regulation device
- Calculation of a time-dependent dP/dU characteristic;
- Variation of the reference value for the network voltage regulation as a function of the dP/dU characteristic.

7. Method according to Claim 6, **characterised in that** the change of the power flow P corresponds to a predetermined value.

8. Method according to Claim 6 or 7, **characterised in that** a predetermined maximum active power is not exceeded.

## Revendications

1. Procédé pour le fonctionnement d'un réseau à basse tension, auquel sont raccordés au moins une installation décentralisée de production de courant et un moyen d'exploitation pour le réglage de tension dans le réseau de basse tension, en particulier un transformateur avec rapport de transformation variable, l'installation décentralisée de production de courant augmentant l'injection de puissance active lorsque la tension du réseau chute et l'abaissant lorsque la tension du réseau augmente, **caractérisé en ce que**, par variation de la valeur de référence pour le réglage de la tension de réseau du réseau de basse tension, cette tension du réseau est influencée à l'intérieur de la bande de tolérance des tensions normales et l'injection de puissance active est ainsi modifiée.

2. Procédé selon la revendication 1, **caractérisé en ce que** le réglage de la puissance active intervient dans la plage de temps d'un réglage tertiaire.

3. Procédé selon l'une quelconque des revendications 1 ou 2, **caractérisé en ce que** la variation de la valeur de référence pour le réglage de la tension du réseau s'effectue par régulateur de tension dans le réseau.

4. Procédé selon la revendication 1 ou 2, **caractérisé en ce que** la variation de la valeur de référence pour le réglage de la tension du réseau s'effectue par d'autres installations de production de courant via le réglage de la puissance active ou de la puissance réactive.

5. Procédé selon la revendication 1 ou 2, **caractérisé en ce que** la variation de la valeur de référence pour le réglage de la tension du réseau s'effectue par des couplages de courant continu à moyenne tension.

6. Procédé selon l'une quelconque des revendications 1 à 5, **caractérisé par** les étapes suivantes :
- mesures du flux de puissance P dans un segment de réseau
- détermination de la tension U réglée sur le dispositif de réglage de tension spécifique
- calcul d'une courbe caractéristique dP/dU dépendante du temps ;
- variation de la valeur de référence pour le réglage de la tension de réseau en fonction de la courbe caractéristique dP/dU.

7. Procédé selon la revendication 6, **caractérisé en ce que** la variation du flux de puissance P correspond à une valeur prédéterminée.

8. Procédé selon la revendication 6 ou 7, **caractérisé en ce qu'**une puissance active maximale prédéfinie n'est pas dépassée.
